# EUROPÄISCHE PATENTSCHRIFT

(11) **EP 0 320 788 B1**
(45) Veröffentlichungstag und Bekanntmachung des Hinweises auf die Patenterteilung: **03.02.1993**
(21) Anmeldenummer: 88120498.6
(22) Anmeldetag: 08.12.1988
(51) Int. Cl.: B29C 45/07, B29C 45/17

(54) **Plastifizieraggregat mit Armierungsskelett für eine Kunststoff-Spritzgiesseinheit**
Plasticising aggregate having a reinforcing frame for a plastic injection unit
Agrégat de plastification comportant une structure d'armature pour une unité d'injection de matière plastique

(30) Priorität: 15.12.1987 DE 3742403
(43) Veröffentlichungstag der Anmeldung: 21.06.1989
(73) Patentinhaber: Hehl, Karl, 72290 Lossburg (DE)
(72) Erfinder: Hehl, Karl, 72290 Lossburg (DE)
(74) Vertreter: Mayer, Friedrich E.

(56) Entgegenhaltungen:
- EP-A- 0 198 410
- DE-C- 3 626 345
- GB-A- 2 098 918

## Beschreibung

Die Erfindung bezieht sich auf ein Plastifizieraggregat entsprechend dem Oberbegriff des Patentanspruches 1.

Bei einem bekannten Plastifizieraggregat dieser Art (DE 36 26 345 C1) weist das Armierungsskelett des Plastifizierzylinders Skelettelemente auf, die als Rollbahnen zur Abstützung und Führung des Plastifizierzylinders sowie als Stellorgane für ein Abstellen des außer Betrieb befindlichen Plastifizierzylinders und als Organe zum Greifen des Plastifizierzylinders beim Abtransport ausgebildet sind. Eine den Plastifizierzylinder teilweise umschließende Schutzabdeckung von U-förmigen Querschnitt ist mit dem Plastifizierzylinder mit Hilfe von Spannbügeln und Trägerstegen verbunden. Zur Herstellung der Verbindung durchsetzen die horizontalen Trägerstege mit ihren freien Enden die vertikalen U-Schenkel der Schutzabdeckung. Diese bildet entlang ihrer unteren Biegekanten horizontale und vertikale Rollflächen für die stationären Laufrollen. Insoweit ist die Schutzabdeckung fester Bestandteil des Armierungsskelettes, das ohne Zuhilfenahme des Fachpersonals des Herstellers nicht ohne weiteres abnehmbar ist. Im Reparaturfalle oder im Falle eines erforderlichen Austausches ist daher der Zugang zu den innerhalb der Schutzabdeckung liegenden Funktionselementen des Plastifizieraggregates, insbesondere zu den Heizelementen erheblich erschwert.

Bekannt ist es ferner, den Plastifizierzylinder eines vergleichbaren Plastifizieraggregates mittels Gleitmuffen auf den Führungssäulen der Spritzgießeinheit abzustützen (DE-AS 29 07 557).

Ferner ist es bekannt, einen in der zentralen Bohrung des Aufnahmekörpers fest montierten Plastifizierzylinder zum Schutz mit einem Blechmantel zu umschließen(US-PS 3,068, 521).

Der Erfindung liegt die Aufgabe zugrunde, ein Plastifizieraggregat der eingangs genannten Gattung derart weiterzubilden, daß der Plastifizierzylinder bei verbesserter Führung beim periodischen Auf-und Absetzen auf die und von der Spritzgießform während des Spritzbetriebes mit geringerem Montageaufwand aus seinen Bauteilen zusammengesetzt werden kann und wesentliche Funktionselemente, insbesondere solche der Heizung mit den zugehörigen Befestigungsorganen und der Steckverbinder für Austausch, Reparatur und Kontrolle leichter zugänglich sind.

Diese Aufgabe wird erfindungsgemäß durch die im Patentanspruch 1 genannten Merkmale gelöst.

Bei dieser Lösung ist die Schutzabdeckung von Stütz- und Führungsfunktionen während des Spritzbetriebes entbunden. Die genannten Funktionen sind stabileren Skelettelementen der Skelettarmierung übertragen. Aus diesem Grunde können die Teile der Schutzabdeckung vom Bedienungspersonal ohne weiteres abgenommen werden, und zwar unabhängig vom jeweiligen Standort oder vom Verhältnis zur Spritzgießeinheit. Die erfindungsgemäße Ausbildung hat den zusätzlichen Vorteil, daß die Führungsleisten als stabile Skelettelemente zugleich als Angriffsorgane für die Transporteinrichtungen beim Abtransport des Plastifizierzylinders nutzbar sind, da sie infolge ihrer Anordnung in einer Fuge zwischen der oberen und der unteren Hälfte einer Schutzabdeckung für diesen Angriff offen sind. Das bei sehr geringem Montageaufwand zerlegbare Plastifizieraggregat kann als standardisiertes Modul zudem bei unveränderten äußeren Abmessungen von Armierungsskelett und Schutzabdeckung unterschiedlich große Plastifizierzylinder enthalten. Nach Anspruch 6 ergibt sich eine einfache Führung des Plastifizierzylinders, weil die stationären Laufrollen in einem Bügel gelagert sind, der unten, wenigstens mittelbar, am Maschinengestell und oben an axial unbeweglichen Führungssäulen der Spritzgießeinheit festgelegt ist. In diesem einzigen Bügel ist der nach Patentanspruch 5 von einem Aufnahmekörper der Spritzgießeinheit rückseitig im Gleitsitz aufgenommene Plastifizierzylinder samt seinem Armierungsskelett auf den Lagerbalken der U-Schenkel in stabilem Gleichgewicht abstellbar (Patentansprüche 7,8). Aus dieser Abstellposition ist der zuvor mittels des Arretierstiftes zur Freisetzung aus dem Aufnahmekörper axial festgelegte Plastifizierzylinder (Patentanspruch 9) zum Abtransport durch Anheben freigegeben.

Nachstehend wird die Erfindung anhand der Zeichnung an einem Ausführungsbeispiel erläutert.

Es zeigen:
Fig.1 1 Das auf dem Maschinengestell einer Kunststoff-Spritzgießmaschine in Arbeitsposition angeordnete Plastifizieraggregat der Spritzgießeinheit,
Fig. 2 die durch die Antriebs- und Einspritzzylinder ergänzte Anordnung nach Fig. 1 in Draufsicht (in verkleinerter Darstellung),
Fig. 3 das auf einem Aufnahmetisch des Maschinengestelles einer Kunststoff-Spritzgießmaschine abgestützte Plastifizieraggregat in Seitenansicht und in teilweisem Schnitt durch die vertikale Symmetrieebene,
Fig. 4 die Anordnung gemäß Fig. 3 ohne Aufnahmekörper für den Plastifizierzylinder sowie ohne Aufnahmetisch für die Spritzgießeinheit und ohne den die Laufrollen tragenden Bügel,
Fig. 5 den mit dem Armierungsskelett versehenen Plastifizierzylinder des Plastifizieraggregates in perspektivischer Darstellung,
Fig. 5a und 5c die das Viereckrohr des Plastifizieraggregates bildenden Teile der Schutzabdeckung,
Fig. 5b Armierungselemente des Plastifizieraggregates,
Fig. 6 einen Schnitt nach Linie VI-VI von Fig. 1 (der Aufnahmekörper ist mit den Antriebs- und Einspritzzylindern versehen),
Fig. 7 einen Schnitt nach Linie VII-VII von Fig. 1 (ohne die stationäre Aufspannplatte der Kunststoff-Spritzgießmaschine),
Fig. 8 das den Bügel des Plastifizieraggregates bildende Gußstück in perspektivischer und vergrößerter Darstellung mit den zugehörigen Laufrollen, Lager-und Abstützelementen,
Fig. 9 einen im Bereich des Arretierbolzens zur axialen Arretierung genommenen Ausschnitt aus dem Plastifizieraggregat in Draufsicht, teilweise aufgeschnitten.

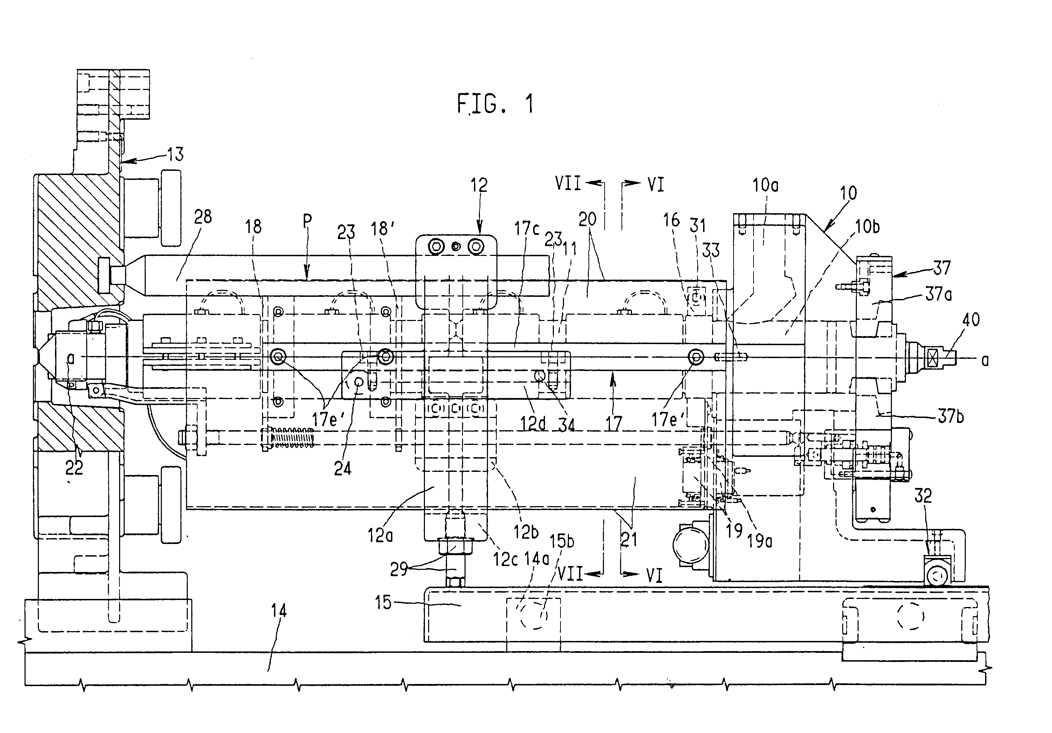

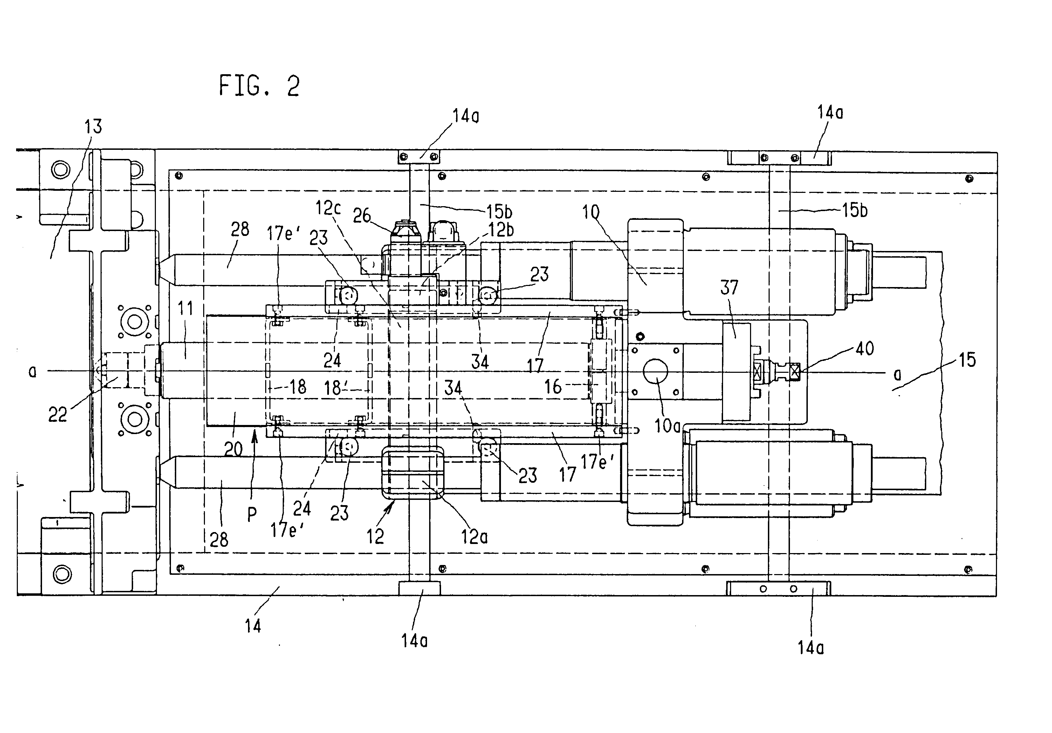

Wie insbesondere aus den Fign. 1,2 erkennbar, ist das Plastifizieraggregat P Bestandteil einer Kunststoff-Spritzgießeinheit (Spritzgießeinheit), welche auf einem Auflagetisch 15 angeordnet ist. Der Auflagetisch ist, wie aus Fig. 2 in Verbindung mit Fig. 1 ersichtlich, auf Säulen 15b verschiebbar gelagert, welche senkrecht zur Spritzachse a-a der Spritzgießeinheit in Lagerböcken 14a des Maschinengestells 14 aufgenommen sind. Dadurch können alternativ einzusetzende Spritzgießformen bedient werden, deren Angußöffnungen je unterschiedlich lokalisiert sind. Der stationäre Formträger 13 der die Spritzgießform aufnehmenden Formschließeinheit ist in den Fign. 1,2 (auf der linken Seite) dargestellt.

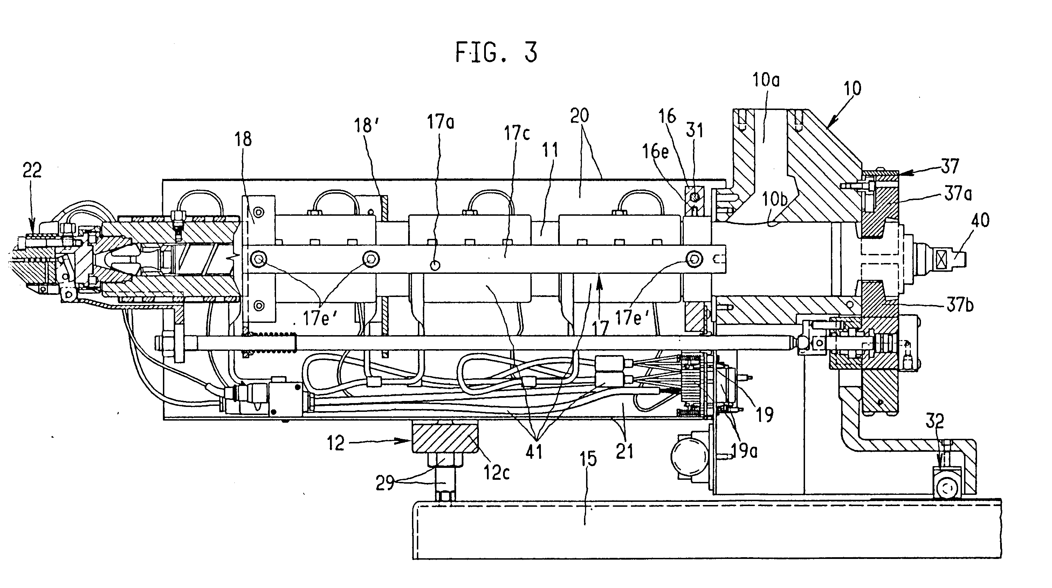

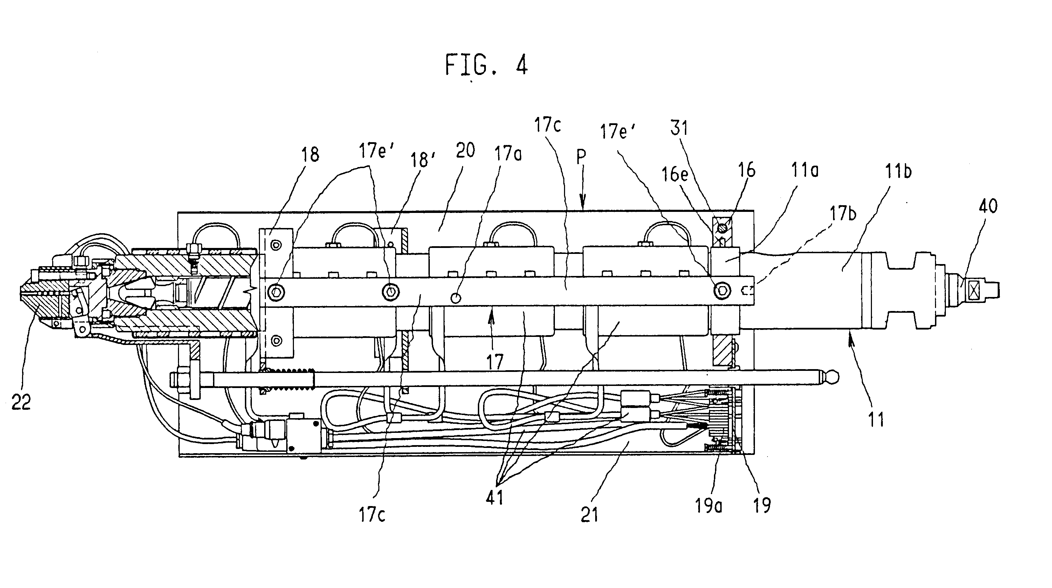

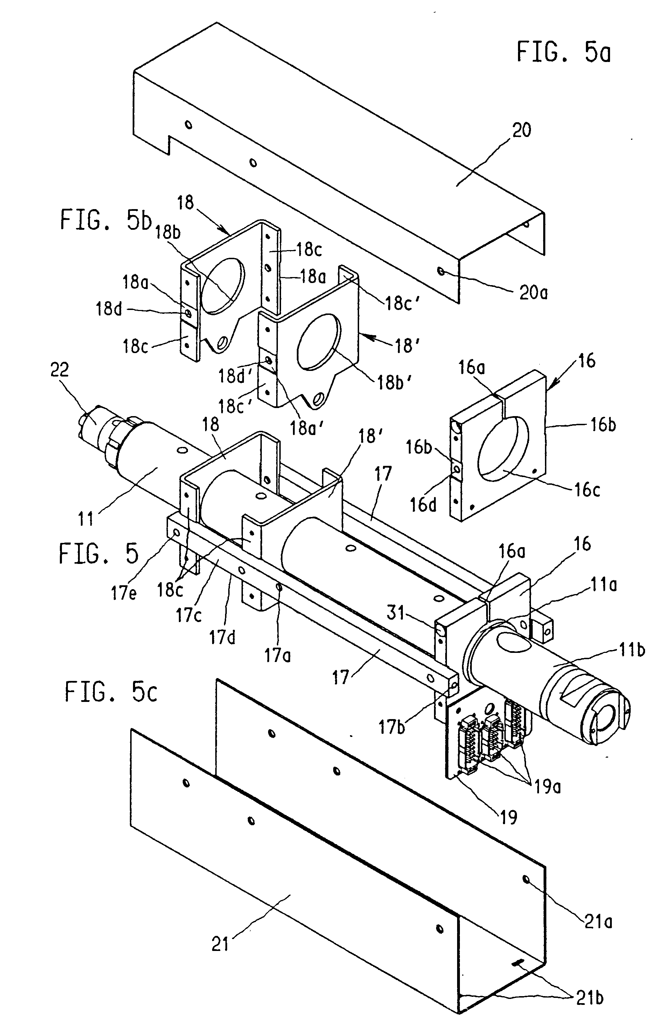

Das Plastifizieraggregat P als solches umfaßt als wesentliche Bestandteile einen mit Heizeinrichtung 41(Fig.3,4) versehenen Plastifizierzylinder 11, eine in diesem angeordnete,rotierbare und axial verschiebbare Plastifizierschnecke 40, ein den Plastifizierzylinder 11 teilweise umschließendes Armierungsskelett 16;17;18;18' sowie ein stationäres Lagerteil (Bügel 12), in welchem Laufrollen 23;24 gelagert sind. Skelettelemente des Armierungsskelettes bilden Rollbahnen 17c;17d, die an den stationären Laufrollen 23;24 zur Führung des Plastifizierzylinders 11 bei den periodischen Axialbewegungen der Spritzgießeinheit während des Spritzbetriebes anliegen. Wie insbesondere aus Fig. 5 ersichtlich, sind die Rollbahnen 17c;17d durch Rollflächen von Führungsleisten 17 gebildet, die im axialen Mittelabschnitt des Plastifizierzylinders 11 mit diesem über radiale Distanzelemente verbunden sind.
^{*} unter Bildung eines Gleitsitzes

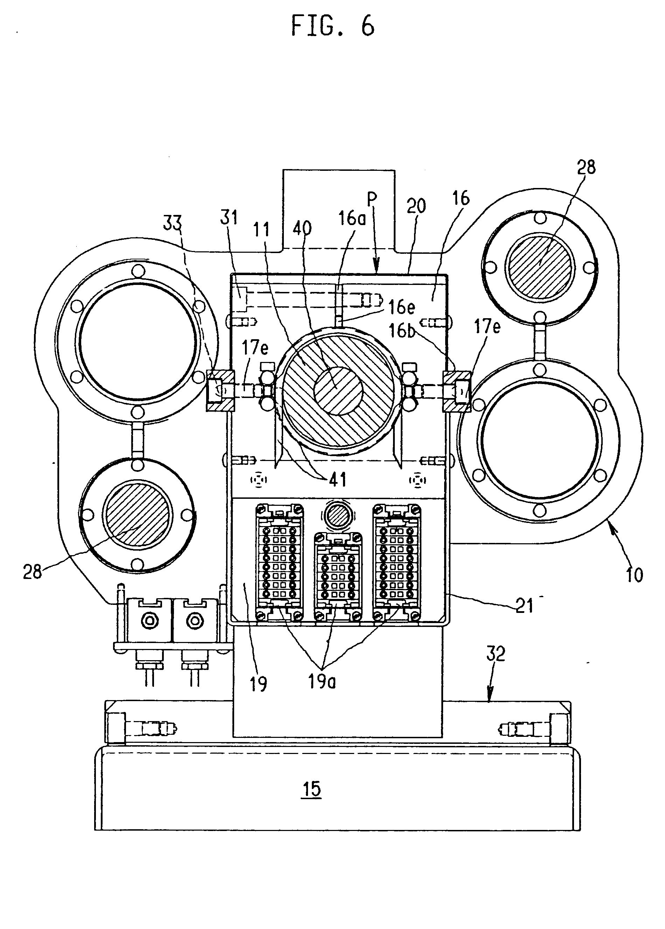

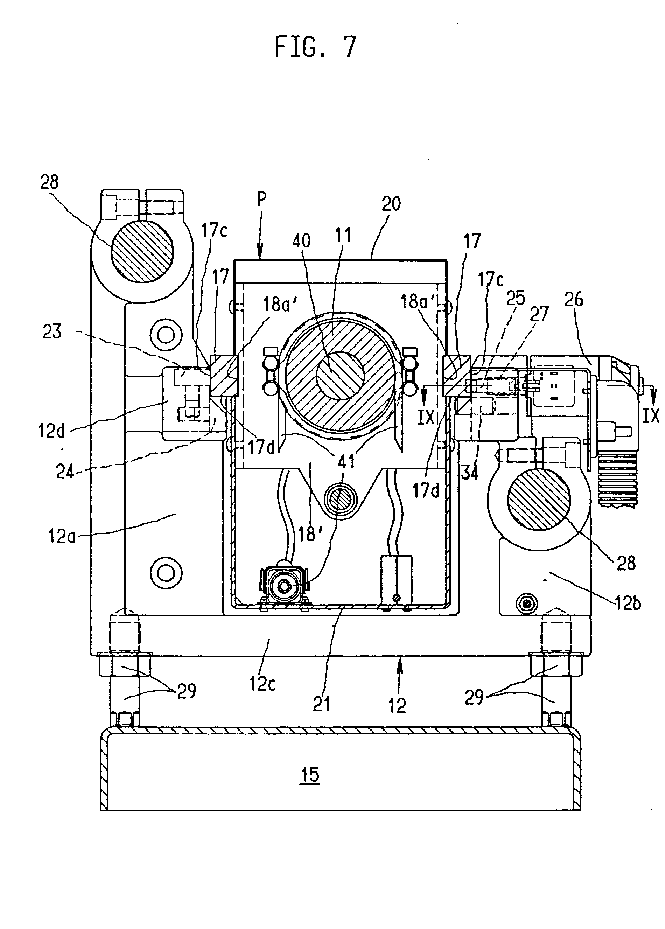

Dabei sitzt ein Distanzelement (Platte 16) fest auf dem Plastifizierzylinder 11 auf. Zwei zentrierende Distanzelemente 18;18' umschließen den Plastifizierzylinder^{*}mit Spiel. Zwei diametral zum Plastifizierzylinder 11 angeordnete Führungsleisten 17 von rechteckigem Querschnitt liegen in einer durch die Spritzachse a-a gehenden horizontalen Ebene. Das auf dem Plastifizierzylinder fest aufsitzende Distanzelement ist durch eine vom Plastifizierzylinder durchgriffene, mit Radialspalt 16a versehene Platte 16 von etwa quadratischem Grundriß gebildet. Die Platte 16 liegt axial an einem Radialflansch 11 (Fig. 5) des Plastifizierzylinders 11 an, der im rückwärtigen Abschnitt des Plastifizierzylinders liegt. Die Platte 16 ist mit dem Mantel des Plastifizierzylinders mit Hilfe einer den vertikalen Spalt 16a überbrückenden Spannschraube 31 verspannt. Bei der Verspannung ergibt sich eine reversible Deformation der Platte 16, indem die beidseits des Spaltes 16a liegenden Bereiche einander angenähert werden. Im vorderen axialen Abschnitt des Plastifizierzylinders umschließen zwei im Abstand voneinander befindliche zentrierende Distanzelemente 18;18' den Plastifizierzylinder. Sie sind durch U-förmig gebogene, gestanzte Blechstücke gebildet. Die Führungsleisten 17 sind einenends an den vertikalen U-Schenkeln 18c,18c' der die zentrierenden Distanzelemente 18;18' bildenden Blechstücke und anderenends an vertikalen Seitenkanten der Platte 16 mittels Schraubenbolzen 17e' (Fig. 1,4) befestigt, welche Befestigungsbohrungen 17e (Fig. 5) der Führungsleisten 17 durchsetzen, um in Gewindebohrungen 16d,18d,18d' - (Fig. 5b) der Distanzelemente einzugreifen. Die an den Mantel des Plastifizierzylinders 11 angrenzenden kreisförmigen Schnittkanten der zentrierenden Distanzelemente 18;18' bilden Gleitlager für geringfügige axiale Bewegungen des Plastifizierzylinders, die beim Aufheizen des Plastifizierzylinders auftreten. Insbesondere aus den Fign. 5 bis 7 ist erkennbar, wie zwei U-förmig gebogene Schutzbleche 20,21 zu einem den Plastifizierzylinder 11 und sein Armierungsskelett 16;17;18;18' im Mittelabschnitt umschließendes Viereckrohr zusammengefügt sind. Dabei sind die Schutzbleche 20,21 auf den Distanzelementen abgestützt, wobei Stege der Schutzbleche 20 und 21 auf den horizontalen oberen und unteren und deren vertikal abgebogene U-Schenkel mit ihren Befestigungsbohrungen 20a,21a an den vertikalen Seitenkanten der Platte 16 und an den vertikalen U-Schenkeln 18c;18c' der zentrierenden Distanzelemente 18;18' anliegen. Wie insbesondere aus den Fign. 6,7 deutlich wird, stehen die Längskanten des oberen Schutzbleches 20 auf den Oberseiten, die Längskanten des unteren Schutzbleches 21 auf den Unterseiten der beiden Führungsleisten 17 auf. Die Führungsleisten 17 treten gewissermaßen aus dem Viereckrohr 20,21 hervor, um ihre restliche horizontale Unterseite und ihre vertikale Außenseite je als Rollbahn 17d bzw. 17c für die Auflage der Laufrollen 24 und 23 freizugeben. Zur Stabilisierung des Armierungsskelettes sind die Führungsleisten 17, wie insbesondere aus Fig.5b ersichtlich, in Vertiefungen 18a,18a', 16b der vertikalen U-Schenkel 18c,18c' bzw.der vertikalen Seitenkanten formschlüssig versenkt. In Fig. 5b sind die Befestigungsbohrungen 18d;18d' an den U-Schenkeln 18c sowie 16d an der Platte 16 erkennbar, die zur befestigenden Aufnahme der Schraubenbolzen 17e' dienen. Der das Viereckrohr rückseitig überragende axiale Abschnitt 11 des Plastifizierzylinders 11 ist in der zentralen Bohrung 10b eines Aufnahmekörpers 10 der Spritzgießeinheit im axialen Gleitsitz aufgenommen. In dieser Position ist der Plastifizierzylinder 11 mit Hilfe von Schiebern 37a,37b an einer Spanneinrichtung 37 verriegelbar, die rückseitig am Aufnahmekörper 10 geführt sind und in Verriegelungsposition in entsprechende Ausnehmungen des Plastifizierzylinders eintauchen (Fig. 3). An der Unterseite der Platte 16 ist eine Steckverbinderplatte 19 befestigt, welche die Unterkante der Platte 16 nach unten überragt und in Arretierschlitzen 21 b (Fig. 5c) des unteren Schutzbleches 21 festgelegt ist. Die Steckverbinderplatte 19 ist für eine axiale Steckrichtung ausgebildet. Ihre Steckverbinder 19a arbeiten mit korrespondieren Steckverbindern am Aufnahmekörper 10 zusammen, um die Heizung des Plastifizierzylinders bzw. seiner Düse 22 sowie die zugehörigen Thermofühler und dergleichen mit Energie zu versorgen. Der entriegelte Plastifizierzylinder 11 ist im konkreten Ausführungsbeispiel dadurch aus dem Aufnahmekörper 10 freisetzbar, daß letzterer vom rückwärtigen Abschnitt des Plastifizierzylinders durch einen hydraulischen Rückwärtshub abgezogen wird. Durch die Rückwärtsbewegung des Aufnahmekörpers von dem zu diesem Zweck axial arretierten Plastifizierzylinder 11 werden die Steckbuchsen des Aufnahmekörpers 10 von den Stekkern 19a der Steckverbinderplatte 19 automatisch abgezogen, wobei der Stromkreis zuvor durch Abschaltung unterbrochen worden ist. Der Aufnahmekörper 10 ist rückseitig mit Hilfe einer Stützeinrichtung 32 auf dem Auflagetisch 15 abgestützt.

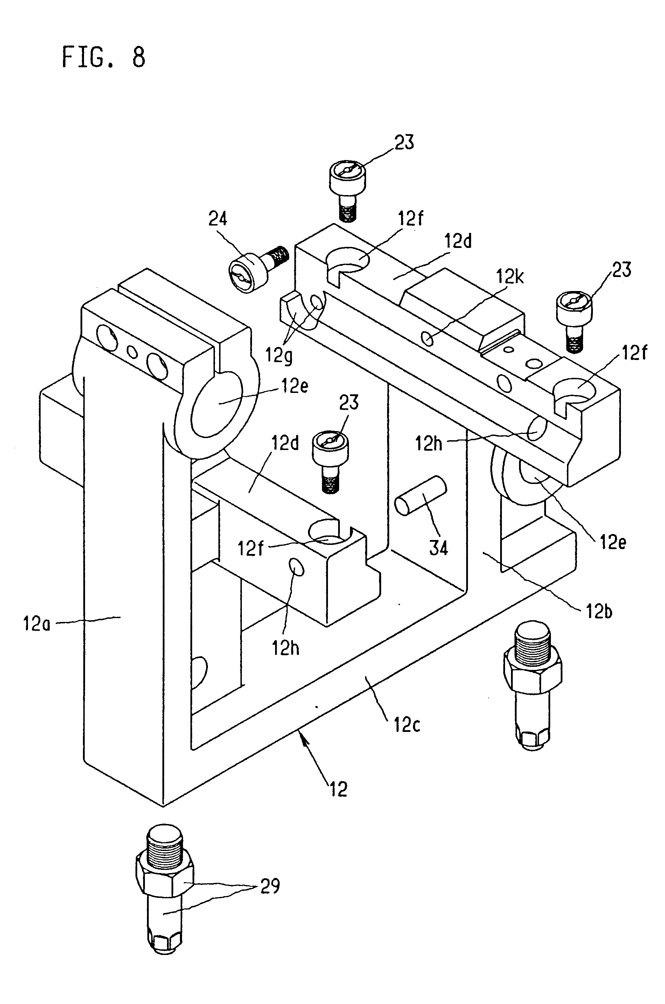

Der Plastifizierzylinder 11 ist samt seinem Viereckrohr 20,21 zwischen den U-Schenkeln 12a;12b eines U-förmigen, auf dem Maschinengestell 14 abstützbaren Bügels 12 aufgenommen, der etwa in der Mitte des Plastifizierzylinders angeordnet ist. Wie der durch ein Gußstück gebildete Bügel 12 gestaltet ist, ergibt sich insbesondere aus der perspektivischen Darstellung der Fig. 8: Die beiden unterschiedlich langen U-Schenkel 12a und 12b sind über einen horizontalen Steg 12c miteinander verbunden. Die freien Enden der U-Schenkel 12a;12b sind mittels Spannmuffen 12e mit Führungsholmen 28 der Spritzgießeinheit verspannt, die im stationären Formträger 13 axial festgelegt sind. Jeder der U-Schenkel 12a;12b ist mit einem zur Spritzachse a-a parallelen Lagerbalken 12d versehen. In jedem Lagerbalken 12d sind zwei Laufrollen 23 gelagert, die mit der vertikalen Rollbahn 17c der benachbarten Führungsleiste 17 zusammenarbeiten und die sich in einem Abstand voneinander befinden, der nahezu der Länge des Lagerbalkens 12d entspricht. Eine weitere Laufrolle 24 jedes Lagerbalkens 12d, die an dessen vorderen Ende angeordnet ist, liegt an einer horizontalen Rollfläche 17d der benachbarten Führungsleiste 17 an. Zur Abstützung des aus dem Aufnahmekörper 10 freigesetzten und mittels seines Armierungsskelettes 16;17;18;18' auf den Lagerbalken 12d im stabilen Gleichgewicht abgestellten Plastifizierzylinders 11 ist am rückseitigen Ende jedes Lagerbalkens 12d ein Lagerelement 34 in einer Ausnehmung 12h verankert. Dabei ruht der Plastifizierzylinder 11 über seine Führungsleisten 17 auf den Laufrollen 24 und den Lagerstiften 34. Der Bügel 12 ist mittels Stützelementen 29 (Fig. 8) auf dem Auflagetisch 15 justierbar abgestützt und festgelegt.

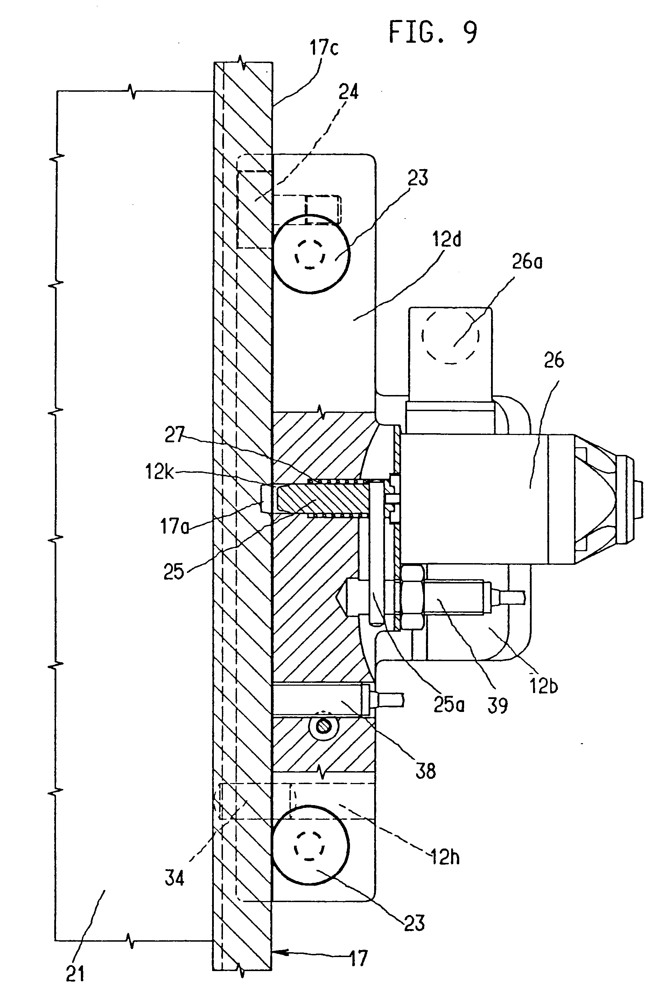

In einer horizontalen Durchtrittsbohrung 12k des Lagerbalkens 12d des kürzeren U-Schenkels 12b ist ein Arretierstift 25 horizontal verschiebbar gelagert, wie insbesondere aus den Fign. 7,9 ersichtlich. Der Arretierstift 25 ist mit Hilfe eines Magneten 26 entgegen der Wirkung einer Feder 27 in eine Arretieröffnung 17a der benachbarten Führungsleiste 17 einsteuerbar. Der Magnet 26 ist über einen Stecker 26a mit Energie versorgt. Ein den Magneten 26 beherrschender Schalter 39 ist mit dem Arretierstift 25 über ein Schaltstift 25a verbunden. Schließlich ist in dem den Arretierstift 25 aufnehmenden Lagerbalken 12d ein Schalter 38 angeordnet, der über die Führungsleiste 17 das Vorhandensein des Plastifizierzylinders 11 über entsprechende Steuersignale dem übergeordneten Rechner meldet. Der Aufnahmekörper 10 ist mit einem Einfüllschacht 10a versehen.

Wie aus den Fign. 1,3 bis 5 erkennbar, tauchen die Bolzen 33 zur Radialsicherung des Armierungsskelettes des Platifizierzylinders 11 teils in Zentrierbohrungen 17b (Fig.5) der Führungsleisten 17 und teils in korrespondierende Zentrierbohrungen des Aufnahmekörpers 10 ein. Ein radialer Stift 16e des Plastifizierzylinders sichert die Platte 16 gegen Drehung (Fig. 6).

Insbesondere aus Fig. 7 in Verbindung mit Fig. 8 ist erkennbar, daß die je mit einem Gewindeschaft versehenen Laufrollen 23,24 in zylindrischen Ausnehmungen 12f,12g der Lagerbalken 12d derart aufgenommen sind, daß ein relativ kleiner Abschnitt ihres Laufmantels zur jeweiligen Anlage an die benachbarte Rollbahn 17c bzw. 17d aus den Körpern der Lagerbalken 12d hervortritt.

Bei entsprechender Bemessung der lichten Weite der Aufnahmebohrungen 16c;18b' und 18b (Fig.5b) der Distanzelemente können in dem als standardisiertes Modul ausgebildeten Plastifizieraggregat P alternativ unterschiedlich große Plstifizierzylinder aufgenommen sein, ohne daß die äußeren Abmessungen des Armierungsskelettes und damit auch der Schutzbleche 20,21 eine Änderung erfahren. Eine solche Standardisierung kann bei entsprechend standardisierten Wechseleinrichtungen zum Wechsel des Plastifizieraggregates von großer Bedeutung sein.

## Patentansprüche

1. Plastifizieraggregat (P) für eine horizontale Kunststoff-Spritzgießeinheit (Spritzgießeinheit) mit einem heizbaren Plastifizierzylinder (11), in welchem eine rotierbare und axial verschiebbare Plastifizierschnecke (40) angeordnet ist,und mit einem den Plastifizierzylinder (11) teilweise einschließenden Armierungsskelett (16;17;18), das mittels wenigstens eines Skelettelementes wenigstens eine an einer stationären Laufrolle anliegende Rollbahn (17c;17d) zur Führung des Plastifizierzylinders (11) bei den periodischen Axialbewegungen der Spritzgießeinheit während des Spritzbetriebes bildet, welche Rollbahn (17c;17d) im Abstand zum Plastifizierzylinder (11) angeordnet ist, dadurch gekennzeichnet, daß die Rollbahn (17c;17d) durch die Rollfläche einer Führungsleiste (17) gebildet ist, die über radiale Distanzelemente mit diesem verbunden ist, von welchen ein Distanzelement (Platte 16) fest auf dem Plastifizierzylinder aufsitzt und wenigstens ein weiteres zentrierendes Distanzelement (18;18') den Plastifizierzylinder (11) mit Spiel unter Bildung eines Gleitsitzes umschließt.

2. Plastifizieraggregat nach Patentanspruch 1, dadurch gekennzeichnet, daß zwei diametral zum Plastifizierzylinder (11) angeordnete Führungsleisten (17) von rechteckigem oder quadratischem Querschnitt vorgesehen sind, die in einer durch die Spritzachse (a-a) gehenden horizontalen Ebene liegen und daß das auf dem Plastifizierzylinder (11) fest aufsitzende Distanzelement durch eine vom Plastifizierzylinder (11) durchgriffene, mit Radialspalt (16a) versehene und mittels eines Stiftes (16e in Fig. 6) drehgesicherte Platte (16) von etwa quadratischem Grundriß gebildet ist.
^{*} (20;21 )

3. Plastifizieraggregat nach Patentanspruch 1 oder 2, dadurch gekennzeichnet, daß im Abstand voneinander befindliche zentrierende Distanzelemente (18;18') durch U-förmig gebogene, gestanzte Blechstücke gebildet sind und daß die Führungsleisten (17) einenends an vertikalen U-Schenkeln (18c,18c') der Blechstücke und anderenends an vertikalen Seitenkanten der Platte (16) befestigt sind, wobei die an den Mantel des Plastifizierzylinders (11) angrenzenden Schnittkanten der zentrierenden Distanzelemente (18;18') Gleitlager bilden.

4. Plastifizieraggregat nach Patentanspruch 2 oder 3, dadurch gekennzeichnet, daß zwei U-förmig gebogene Schutzbleche^{*}unter Bildung eines den Plastifizierzylinder (11) und sein Armierungsskelett (16;17;18;18') im Mittelabschnitt umschließendes Viereckrohr an den Distanzelementen (Platte 16 bzw. zentrierende Distanzelemente 18;18') und den Führungsleisten (17) anliegen.

5. Plastifizieraggregat nach Patentanspruch 4, dadurch gekennzeichnet, daß der das Viereckrohr (20;21) überragende Abschnitt(11 b) des Plastifizierzylinders (11) in der Bohrung(10b) eines Aufnahmekörpers (10) der Spritzgießeinheit im axialen Gleitsitz aufgenommen und die Platte (16) mit einer für eine axiale Steckrichtung ausgebildeten Steckverbinderplatte (19) versehen ist.

6. Plastifizieraggregat nach Patentanspruch 4 oder 5, dadurch gekennzeichnet, daß der Plastifizierzylinder (11) samt seinem Viereckrohr (20,21) etwa in seiner Mitte zwischen den U-Schenkeln (12a;12b) eines U-förmigen, auf dem Maschinengestell abstützbaren Bügels (12) des Plastifizieraggregates (P) aufgenommen ist, an welchen U-Schenkeln (12a;12b) die Laufrollen (23;24) abgestützt sind.

7. Plastifizieraggregat nach Patentanspruch 6, dadurch gekennzeichnet, daß die an ihren freien Enden mit Führungssäulen (28) der Spritzgießeinheit verbundenen U-Schenkel (12a;12b) des durch ein Gußstück gebildeten Bügels (12) je einen zur Spritzachse (a-a) parallelen Lagerbalken (12d) aufweisen, in welchem je zwei mit einer vertikalen und eine mit einer horizontalen Rollbahn (17c bzw. 17d) der Führungsleiste (17) zusammenarbeitende Laufrollen (23,24) gelagert sind.

8. Plastifizieraggregat nach Patentanspruch 7, dadurch gekennzeichnet, daß in jedem Lagerbalken (12d) zur stabilen Abstützung des aus dem Aufnahmekörper (10) freigesetzten und mittels des Armierungsskelettes (16,17,18) abgestellten Plastifizierzylinders(11) ein Lagerelement (34) vorgesehen ist, das sich im Abstand von der mit einer horizontalen Rollfläche zusammenarbeitenden Laufrolle (24) befindet.

9. Plastifizieraggregat nach einem der Patentansprüche 6 bis 8, dadurch gekennzeichnet, daß in einem der U-Schenkel (12a;12b) ein Arretierstift (25) horizontal verschiebbar gelagert ist, der mit Hilfe eines Magneten (26) entgegen der Wirkung einer Feder (27) in eine Arretieröffnung (17a) der benachbarten Führungsleiste (17) einsteuerbar und über einen Schaltstift (25a) mit einem den Magneten (26) beherrschenden Schalter (39) verbunden ist.

10. Plastifizieraggregat nach einem der vorhergehenden Patentansprüche, dadurch gekennzeichnet, daß es im Verbund der Spritzgießeinheit mittels eines motorisch antreibbaren, auf dem Maschinengestell der Kunststoff-Spritzgießmaschine abgestützten Auflagetisches (15) quer zur Spritzachse (a-a) begrenzt verschiebbar ist, wobei der Bügel (12) mittels Abstützelementen (29) unter Fixierung auf dem Auflagetisch (15) in eine arbeitsgerechte Postion einjustierbar ist.

## Claims

1. Plasticising unit (P) for a horizontal plastics injection moulding unit (injection moulding unit) with a heatable plasticising cylinder (11) in which is located a rotatable and axially displaceable plasticising screw (40), and with a reinforcing skeleton (16;17;18) which partly encloses the plasticising cylinder (11) and which, by means of at least one skeleton member, forms at least one track (17c;17d) bearing on a stationary roller in order to guide the plasticising cylinder (11) during the cyclic axial movements of the injection moulding unit during injection operations, said track (17c;17d) being located at a spacing from the plasticising cylinder (11), characterised in that the track (17c; 17d) is formed by the track surface of a track bar (17) which is connected to the latter by radial spacer members, of which one spacer member (plate 16) is securely mounted on the plasticising cylinder (11) and at least one further centering spacer member (18; 18') encloses the plasticising cylinder (11) with a degree of clearance, forming a sliding fit.

2. Plasticising unit according to claim 1, characterised in that two track bars (17), of rectangular or quadrangular cross-section, are disposed diametrally relative to the plasticising cylinder (11), and lie on a horizontal plane passing through the injection axis (a - a), and in that the spacer member securely mounted on the plasticising cylinder (11) is formed by a plate (16), of approximately square plan projection, penetrated by the plasticising cylinder (11), provided with a radial slot (16a), and secured against rotation by a pin (16e in Fig. 6).

3. Plasticising unit according to claim 1 or 2, characterised in that spaced-apart centering spacer members (18;18') are formed by U-shaped bent stamped sheet metal members, and in that the track bars (17) are secured at one end on vertical U-shaped legs (18c, 18c') of the sheet metal members, and at the other end on vertical lateral edges of the plate (16), the cut edges of the centering spacer members (18;18') adjacent to the shell of the plasticising cylinder (11) forming sliding bearings.

4. Plasticising unit according to claim 2 or 3, characterised in that two U-shaped bent guard plates (20, 21) bear on the spacer members (plate 16 or centering spacer members 18; 18') and the track bars (17), forming a quadrangular-section tube enclosing the plasticising cylinder (11) and its reinforcing skeleton (16; 17; 18; 18') in the central portion.

5. Plasticising unit according to claim 4, characterised in that the portion (11 b) of the plasticising cylinder (11) projecting out of the quadrangular-section tube (20;21) is accommodated in the bore (10b) of a receiving body (10) of the injection moulding unit with a sliding fit, and the plate (16) is provided with a plug connector plate (19) designed for an axial plug- in direction.

6. Plasticising unit according to claim 4 or 5, characterised in that the plasticising cylinder (11), together with its quadrangular-section tube (20, 21) is accommodated approximately at its centre between the U-shaped legs (12a; 12b) of a U-shaped bracket (12), supportable on the pedestal, of the plasticising unit (P).

7. Plasticising unit according to claim 6, characterised in that The U-shaped legs (12a; 12b) of the bracket (12) in the form of a casting, and connected at their free ends to track rods (28) of the injection moulding unit, each have a mounting beam (12d) parallel with the injection axis (a - a), in each of which are mounted two rollers (23, 24) operating in conjunction with a vertical and a horizontal track (17c or 17d) respectively.

8. Plasticising unit according to claim 7, characterised in that there is provided, in each mounting beam (12d) for stable support of the plasticising cylinder (11), which has been released from the receiving body (10) and deposited by means of the reinforcing skeleton (16, 17, 18), a bearing element (34) which is located at a spacing from the roller (24) operating in conjunction with a horizontal track.

9. Plasticising unit according to one of claims 6 to 8, characterised in that there is horizontally displaceably mounted in one of the U-shaped legs (12a; 12b) a locking pin (25) which, with the aid of a magnet (26) may be shifted against the force of a spring (27) into a locking opening (17a) in the adjacent track bar (17), and is connected by an actuating pin (25a) to a switch (39) controlling the magnet (26).

10. Plasticising unit according to one of the foregoing claims, characterised in that, in the composite injection moulding unit, it is displaceable to a limited degree transversely to the injection axis (a -a) by means of a motor-driven support deck (15) supported on the pedestal of the plastics injection moulding machine, the bracket (12) being adjustable into and securable to the support deck (15) in an appropriate operating position by means of support members (29).

## Revendications

1. Agrégat de plastification (P) pour une unité horizontale de moulage de matières plastiques par injection (unité de moulage par injection), présentant un cylindre de plastification (11) pouvant être chauffé, dans lequel est disposée une vis sans fin de plastification (40) rotative et pouvant coulisser axialment, ainsi qu'une structure d'armature (16 ; 17 ; 18) qui emprisonne partiellement le cylindre de plastification (11) et forme, à l'aide d'au moins un élément d'armature, au moins une piste de roulement (17c ; 17d) appliquée contre un galet fixe de roulement, en vue de guider le cylindre de plastification (11) lors des mouvements axiaux périodiques de l'unité de moulage par injection en mode injection, ladite piste de roulement (17c ; 17d) étant agencée à distance du cylindre de plastification (11), caractérisé par le fait que la piste de roulement (17c ; 17d) est matérialisée par la surface de roulement d'une barrette de guidage (17) qui est reliée, audit cylindre, par l'intermédiaire d'éléments d'espacement radiaux parmi lesquels un élément d'espacement (plaque 16) est calé rigidement sur le cylindre de plastification, et au moins un autre élément d'espacement (18 ; 18') à effet de centrage ceinture avec jeu le cylindre de plastification (11), en formant une assise coulissante.

2. Agrégat de plastification selon la revendication 1, caractérisé par la présence de deux barrettes de guidage (17) de section transversale rectangulaire ou carrée, qui occupent des positions diamétrales par rapport au cylindre de plastification (11), et sont situées dans un plan horizontal passant par l'axe d'injection (a-a) ; et par le fait que l'élément d'espacement calé rigidement sur le cylindre de plastification (11) est matérialisé par une plaque (16) de configuration sensiblement carrée, traversée par le cylindre de plastification (11), pourvue d'un interstice radial (16a) et empêchée de tourner au moyen d'un téton (16e sur la figure 6).

3. Agrégat de plastification selon la revendication 1 ou 2, caractérisé par le fait que des éléments d'espacement (18 ; 18') à effet de centrage, situés à distance l'un de l'autre, sont matérialisés par des pièces en tôle coudées en U et venues de matriçage ; et par le fait que les barrettes de guidage (17) sont fixées par une extrémité à des branches verticales (18c, 18c') des U des pièces en tôle et, par l'autre extrémité, à des bords latéraux verticaux de la plaque (16), les arêtes de découpe des éléments d'espacement (18 ; 18') à effet de centrage, adjacentes à l'enveloppe du cylindre de plastification (11), formant des paliers de glissement.

4. Agrégat de plastification selon la revendication 2 ou 3, caractérisé par le fait que deux tôles protectrices (20 ; 21) coudées en U sont appliquées contre les éléments d'espacement (plaque 16, respectivement éléments d'espacement 18 ; 18' à effet de centrage) et contre les barrettes de guidage (17), en formant un tube rectangulaire qui entoure le cylindre de plastification (11) et sa structure d'armature (16 ; 17 ; 18 ; 18') dans la région centrale.

5. Agrégat de plastification selon la revendication 4, caractérisé par le fait que la région (11 b) du cylindre de plastification (11) qui dépasse au-delà du tube rectangulaire (20 ; 21) est reçue, avec assise coulissante dans le sens axial, par l'alésage (10b) d'un corps de logement (10), la plaque (16) étant dotée d'une plaque (19) à connecteurs enfichables, conçue pour une direction axiale d'enfichage.

6. Agrégat de plastification selon la revendication 4 ou 5, caractérisé par le fait que le cylindre de plastification (11) est reçu sensiblement en son centre, en même temps que son tube rectangulaire (20, 21), entre les branches (12a ; 12b) du U d'un étrier (12) de l'agrégat de plastification (P), configuré en U et pouvant prendre appui sur le bâti de la machine, les galets de roulement (23 ; 24) étant en appui contre lesdites branches (12a ; 12b) du U.

7. Agrégat de plastification selon la revendication 6, caractérisé par le fait que les branches (12a ; 12b) du U de l'étrier (12) matérialisé par une pièce venue de coulée, qui sont reliées par leurs extrémités libres à des colonnes de guidage (28) de l'unité de moulage par injection, présentent chacune une entretoise de montage (12d) parallèle à l'axe d'injection (a-a), et dans laquelle sont respectivement montés deux et un galets de roulement (23, 24) qui coopèrent avec une piste de roulement verticale, et avec une piste de roulement horizontale (17c, respectivement 17d) de la barrette de guidage (17).

8. Agrégat de plastification selon la revendication 7, caractérisé par la présence dans chaque entretoise de montage (12d), en vue de conférer un appui stable au cylindre de plastification (11) dégagé du corps de logement (10) et déposé au moyen de la structure d'armature (16, 17, 18), d'un élément de montage (34) situé à distance du galet de roulement (24) coopérant avec une surface horizontale de roulement.

9. Agrégat de plastification selon l'une des revendications 6 à 8, caractérisé par le fait qu'un tenon d'arrêt (25), monté à coulissement horizontal dans l'une des branches (12a ; 12b) du U, peut être introduit par commande dans un perçage d'arrêt (17a) de la barrette de guidage voisine (17), à l'aide d'un aimant (26) et en s'opposant à l'action d'un ressort (27), et est raccordé, par l'entremise d'un axe d'enclenchement (25a), à un interrupteur (39) pilotant l'aimant (26).

10. Agrégat de plastification selon l'une des revendications précédentes, caractérisé par le fait qu'il peut accomplir, en combinaison avec l'unité de moulage par injection, des coulissements limités transversalement par rapport à l'axe d'injection (a-a), au moyen d'une semelle d'appui (15) pouvant être entraînée par un moteur et prenant appui sur le bâti de la machine de moulage de matières plastiques par injection, l'étrier (12) pouvant être ajusté à une position opérativement adéquate, au moyen d'éléments de soutien (29), avec consignation à demeure sur la semelle d'appui (15).
